# EUROPEAN PATENT SPECIFICATION

(11) **EP 1 620 789 B1**
(45) Date of publication and mention of the grant of the patent: **13.04.2011**
(21) Application number: 04751839.4
(22) Date of filing: 10.05.2004
(51) Int. Cl.: G06F 3/033

(54) **METHOD AND APPARATUS FOR NAVIGATING ALPHABETIZED TEXT**
VERFAHREN UND GERÄT ZUM BROWSEN IN EINEM ALPHABETISCH SORTIERTEN TEXT
PROCEDE ET DISPOSITIF POUR NAVIGUER DANS UN TEXTE ECRIT PAR ORDRE ALPHABETIQUE

(30) Priority: 08.05.2003 US 469534 P
(43) Date of publication of application: 01.02.2006
(73) Proprietor: Thomson Licensing, 92130 Issy-les-Moulineaux (FR)
(72) Inventor: CSICSATKA, Tibor, George, San Marcos, CA 92078 (US); FUNG, Kam, Keung, Causeway Bay (CN); QIU, Cai Xia, 510730 Guang Zhou (CN)
(74) Representative: Le Dantec, Claude
(86) International application number: PCT/US2004/014641
(87) International publication number: WO 2004/104815

(56) References cited:
- EP-A- 0 813 138
- US-A- 6 128 012
- US-A1- 2002 109 709
- US-A1- 2003 043 198

## Description

### Field of the Invention

The present invention relates to a method and apparatus for improving the process of searching for a specific item in a large alphabetized list when using up and down scroll buttons in a portable electronic device or personal computer, and in particular, improving the speed of searching for a specific item in a large alphabetized list.

### Background Information

Many portable electronic devices and personal computers type devices have a limited display size that may allow for the display of only a limited number of lines of text. Searching for a particular file using such a device when the device includes a large number of files may provide a difficult challenge for the user. In the case of a hard disc drive based personal digital audio player, such as an MP3 player, the device may contain from three thousand (3000) to six thousand (6000) or even more songs or digital audio data files. In current devices, up and down scroll buttons or keys are widely used to navigate up or down a list of song titles. These titles may be arranged in an alphabetical order to help find a specific item. However, because there are many thousands of items in the list it may take a very long time using a conventional scrolling method to locate a song that is in the middle or far end of the list.

To try and alleviated this problem, various techniques have been developed in order to increase the scroll rate as a function of how long the up or down keys are pressed. In one method, the scroll rate will accelerate the longer the key is held down. This is an attempt to reduce the amount of time it may take to scroll through a list of items.

As an example of a prior art technique aimed at reducing the amount of time it may take to scroll through a list of items, the scroll rate will accelerate the longer the key is held down. For instance, a single quick key/button press (i.e. less than 0.5 seconds) advances one item in the list. When the key is pressed and held for more than 0.5 seconds and up to 2.0 seconds, the list is advanced at five (5) items per second. When the key is pressed and held for more than 2.0 seconds and up to 4.0 second, the list advances at ten (10) items per second. When the key is pressed and held for more than 4.0 seconds, the list advances at twenty (20) items per second.

Eventually, however, the scrolling becomes so fast that the text becomes unreadable. Therefore, an upper limit should be set for the scroll rate. If twenty (20) items per second is set as that limit, it would take five (5) minutes to scroll through six thousand (6,000) items (i.e. 5 minutes = 6,000 items / 20 items per second /60 seconds per minute). Additionally, when the key is released and pressed again, the process starts over at the beginning.

Document US 2002/0109709 A1 discloses a user interface having three scrolling modes, each providing an increased scrolling rate. After a certain time, a helper letter is displayed instead of the list.

It is clear from the above that the current process for searching or scrolling through a large list of text in order to located a particular item is rather time consuming and/or cumbersome.

It is therefore evident from the above discussion that what is needed is a more efficient manner of searching or scrolling through a large amount of alphabetized text.

It is therefore further evident from the above discussion that what is needed is a faster manner of locating a text item through scrolling a large alphabetized text list.

These needs and others are accomplished through application of the principles of the subject invention and/or as embodied in one or more various forms and/or structures such as are shown and/or described herein.

### Summary of the Invention

A method and/or apparatus improves the speed of searching for a specific text item in an alphabetized text list during up and/or down navigation of the alphabetized text list. The method provides controlled navigation through the alphabetized text list depending, for example, on the amount of time that user input is received or an appropriate button is actuated, and/or list characteristics such as the number of text items per letter of the alphabet. The method may be implemented on a portable audio data player, PC or other electronic device.

In one form, the present invention provides a method of navigating through an alphabetized list of text items representing audio data files in an electronic device. The method includes: (a) advancing and displaying the alphabetized list of text items by one text item in response to a key press of a first duration, (b) advancing and displaying the alphabetized list of text items by a predetermined rate of text items in response to a key press of a second duration, and (c) advancing and displaying the alphabetized list of text items by text items having a starting letter that is next in the alphabet relative to a starting letter of a text item currently being displayed in response to a key press of a third duration.

In another form, the present invention provides a digital audio data player. The digital audio data player includes: a data storage device for storing an alphabetized list of text items corresponding to a plurality of digitally encoded audio data files, a display for displaying the alphabetized list of text items, a first user input device for accepting user input, and a controller, coupled to the data storage device, the display, and the first user input device, for controlling the operation of the data storage device and the display in response to user input. The controller is operative to (i) advance and display the alphabetized list of text items by one text item in response to user input of a first duration via the first user input device, (ii) advance and display the alphabetized list of text items by a predetermined rate of text items in response to user input of a second duration via the first user input device; and (iii) advance and display the alphabetized list of text items by text items having a starting letter that is next in the alphabet relative to a starting letter of a text item currently being displayed in response to user input of a third duration via the first user input device.

### Brief Description of the Drawings

The above mentioned and other features and objects of this invention, and the manner of attaining them, will become more apparent an the invention itself will be better understood by reference to the following description of one embodiment of the invention taken in conjunction with the accompanying drawings, wherein:
Fig. 1 is a block schematic diagram of a portable audio data player in which the subject invention may be utilized;
Fig. 2 is a top view of the portable audio data player of Fig. 1;
Fig. 3 is a back view of the portable audio data player of Fig. 1;
Fig. 4 is a right side view of the portable audio data player of Fig. 1;
Fig. 5 is a display representation of a line by line scrolling mode in accordance with an aspect of the principles of the subject invention;
Fig. 6 is a display representation of a page by page scrolling mode in accordance with an aspect of the principles of the subject invention;
Fig. 7 is a display representation of an alphabetical scrolling mode in accordance with an aspect of the principles of the subject invention; and
Fig. 8 is a flowchart of an exemplary method implementing the principles of the present invention.

Corresponding reference characters indicate corresponding parts throughout the several views. Although the drawings represent embodiments of the invention, the drawings are not necessarily to scale and certain features may be exaggerated in order to better illustrate and explain the present invention. The exemplification set out herein illustrates one embodiment of the invention, in one form, and such exemplification is not to be construed as limiting the scope of the invention in any manner.

### Detailed Description

The embodiment disclosed herein is not intended to be exhaustive or limit the invention to the precise form disclosed but rather that others skilled in the art may utilize its teaching.

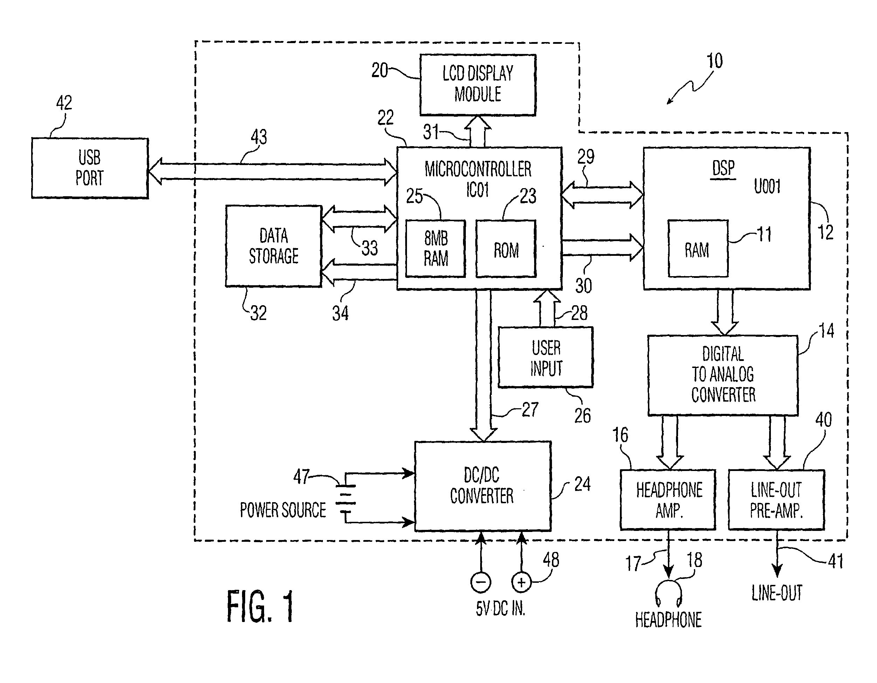

Fig. 1 shows a block diagram of an electronic device represented as a portable audio data player 10 in which the subject invention may be utilized and/or embodied. It should be appreciated that the portable audio data player 10 is only exemplary of the type of electronic device or component that may utilize and/or embody the principles of the subject invention. As such, the portable audio data player 10 is representative of those other devices and/or components utilizing and/or embodying the present invention, some but not necessarily all of which may be discussed herein. Such other devices include personal computers (PCs), music management software, hard drive and flash memory type audio data players, compact disc players, DVD players, PVR products and/or the like in which a user may navigate, advance or scroll (in either an up or down sense) through a list of text items. As indicated, the method may be embodied as programming or software.

The general arrangement and operation of the various elements of portable audio data player 10 are described herein both in general and in the context of the present invention. However, the details of the various elements of audio data player 10 are well known to those skilled in the art.

Audio data player 10 comprises microcontroller (controller or the like) 22 that controls the various elements and the overall operation of audio data player 10, including transferring data from data storage 32, through buffer memory 25, and to audio decoder digital signal processor (DSP) 12. Microcontroller 22 includes a suitable amount of memory 23, for storing various instruction sets and programs for controlling the operation of audio data player 10 including carrying out or implementing the principles of the present invention. As pointed out in greater detail below, the method according to the principles of the subject invention may be utilized by other types of devices or components that play audio from a multitude of pre-recorded content, especially digital audio content, data and/or files.

DSP 12 may be programmed to perform a variety of signal processing functions during playback of a selected audio data file as well as selective segments or portions (i.e. audio clips) of audio data files. In this case, the functions that DSP 12 performs during playback include, but are not limited to, decoding audio data files, volume control, digital sound equalization, and sample conversion. The DSP 12 also performs other functions necessary to implement the principles of the subject invention as well other typical functions not necessarily discussed herein. In that regard, DSP 12 includes onboard memory 11, wherein the decoder files, audio data files, audio clips, equalizer mode selection, and various other required data are loaded during playback.

The decoder files comprise programs that control the decoding operations of DSP 12 the audio data files including audio clips include data associated with the audio content. Both the audio data files and the decoder files may be stored in data storage 32. The decoder file including the programs is transferred to DSP memory 11 from data storage 32. Alternatively, the decoder files may be stored in ROM 23, RAM 11 or other suitable storage device of player 10. Further, the decoder files and other system files and programs may also be stored in SDRAM 25, or other suitable storage devices coupled to DSP 12. Also, microcontroller 22 and DSP 12, as well as other elements within player 10 may be embodied within a single element, for example, within a single IC.

Audio data and decoder programs stored in data storage 32 may be encrypted, requiring that decoding program files and audio data files be decrypted by DSP 12 using one or more decryption keys. The decryption keys may also be stored in data storage 32 and may be security linked to the particular storage device or some other coded component of audio data player 10 so that audio data files encrypted for use on a particular audio data player may only be decrypted and played by that particular audio data player.

As a selected audio file is decoded, DSP 12 provides the decoded data stream to digital to analog converter 14. D/A converter 14 converts the digital output of DSP 12 into an analog signal and provides the analog signal to headphones amplifier 16 and lineout pre-amp 40. The analog signals are amplified and provided to lineout jack 41 and headphones jack 17, both disposed on housing 13 of audio player 10.

Audio player 10 is adapted to operate with data storage 32. In this embodiment, data storage 32 is a large data storage device, specifically a hard drive, which can be used to store various data files, including encoded audio data files, decoder files for controlling the decoding operation of DSP 12, playlist text files, alphabetized text files of audio file content, audio clips, and computer data files. Data storage device 32 may be in the form of a removable device, such as a compact flash card, or secure media card. A large amount of data can be readily transferred between data storage 32 and microcontroller 22 through data bus 33. Buffer memory 25 operates as a circular data buffer to prevent interruption of audio playback caused by a skip or other similar moving data storage device data transfer delays. Audio player 10 also has a display module or device 20 that is represented as an LCD display module. It should be appreciated, however, that the type of display module may vary as appropriate.

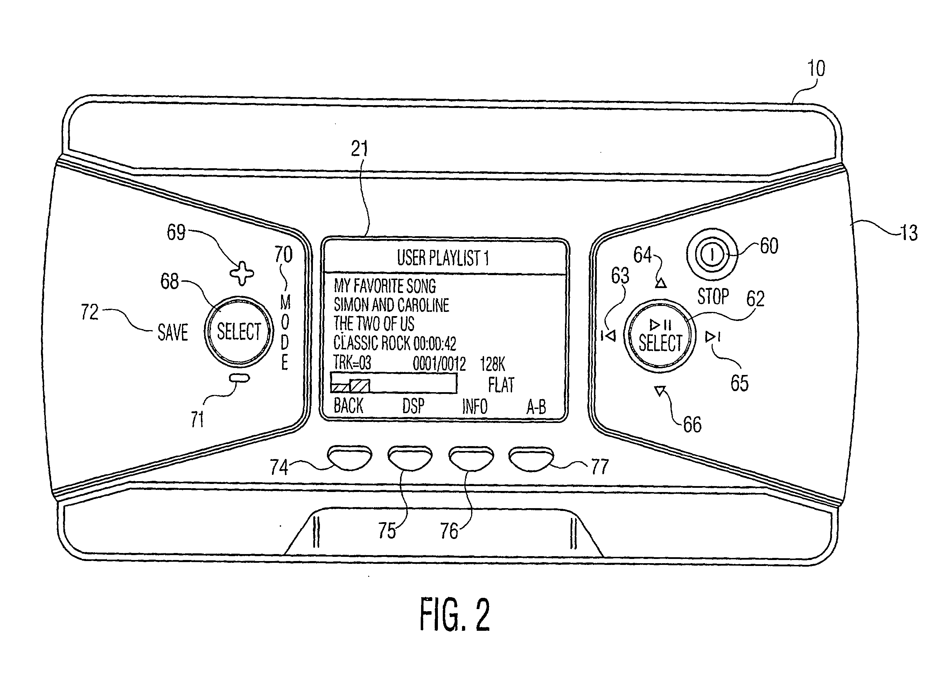

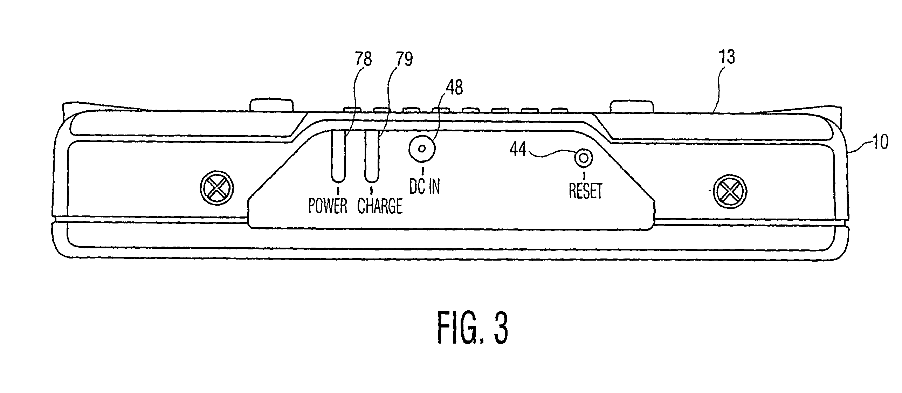

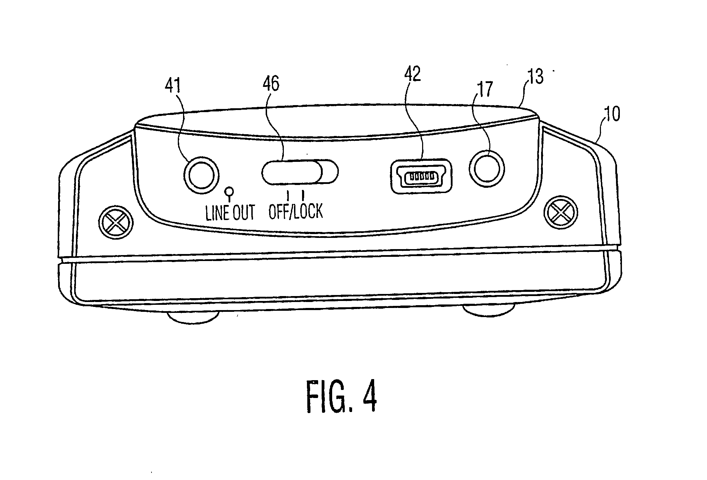

Figs. 2-4 illustrate an exemplary embodiment of the display, buttons, switches, indicators and ports that may be disposed on housing 13 of audio data player 10 that are used as indicated herein to carry out the principles of the present invention such as for example selecting a list or listing of audio data files or selecting the type of information to be displayed regarding the selected list or listing of audio files. One or more of the various buttons constitute a user interface or user input device for allowing the user to make selections appropriate for the particular mode of digital audio player 10. User input 26 (as depicted in block form in Fig. 1) comprises a plurality of buttons 44 (Fig. 3), 46 (Fig. 4) and 60-77 disposed on housing 13 of audio data player 10 for allowing a user to sort and select particular audio data files, create and/or select particular lists or listings of audio data files compiled in various forms such as by title, artist, album, date, etc., scroll or advance through the selected list or listing of audio files, for playback, to control playback settings, select a set or collection of audio data files, select preferences for attributes for playback of audio clips, inclusion or adding of identifying data representative of an associated audio data file for a currently playing audio clip into a preferably, but not necessarily, selectable playlist, skipping the inclusion of identifying data representative of an associated audio data file for a currently playing audio clip, and/or other features and/or functions associated with a typical audio data player, as well as for the implementation of the present invention.

User input 26 may also comprise other input devices known in the art, for example, keyboard, voice activated touch pad, and touch screen input devices. Two multi-way switches comprise buttons 62 and 68. Soft keys 74-77 are multifunction buttons whose function change for various user interface menu displays. Audio data player 10 also includes display 21 disposed on housing 13. Display 21 displays the audio data files, playlists and audio clip information stored in data storage 32, the function of soft keys 74-77, and various status information associated with audio data player 10, such as the playback status shown in Fig. 2 as well as top level menus. Display 21 is operable in conjunction with the other components of audio player 10 to show text data of audio files and/or data regarding the audio files such as artist, title, and/or the like that are stored in audio data player 10. This information is scrollable on display 21 in accordance with the principles of the subject invention.

In Fig. 2, STOP/POWER button 60 allows the user to stop playback and to turn audio data player 10 on and off. PLAY/PAUSE button 62 allows the user to start playback and to pause playback. Button 62 may be moved in the UP, DOWN, LEFT, and RIGHT directions and allows a user to move a highlight left or right when using the menu, and to skip back to the previous audio data file or audio clip, or scan forward or backward in the present audio data file when playing music. Button 62 also allows the user to move the highlight up or down when using the menu or when scrolling, advancing or navigating through a list of text such as a selected listing or list of audio files presented in whatever manner (i.e. as a list of the audio file title, as a list of audio file artist, or the like).

Additionally, button 62 is used as a user input for initiating and then controlling the rate of navigation, scrolling or advancing through the text list in one direction. Control of the rate of navigation is accomplished by the length of time that the user holds down (presses or actuates) down button 62 in the desired direction, details and various manners of implementing the subject feature of which are discussed below. Other buttons, keys, inputs or one or more even touch screen inputs (not shown) may be used instead of or in addition to down arrow button 66 and up arrow button 64.

Referring still to Fig. 2, SELECT button 68 allows the user to select a highlighted item such as when scrolling or advancing (collectively, navigating) through the list or listing of audio files. Moving button 68 in the direction of Volume up 69 increases the playback volume level for headphone 18 and volume down 71 decreases the volume level. Moving button 68 in the direction of MODE 70 allows the user to select a particular playback mode, including NORMAL, REPEAT, REPEAT ONE, REPEAT ALL, SHUFFLE, REPEAT ALL SHUFFLE, and playlist creation modes PLAYLIST CREATION, and AUDIO CLIP PREFERENCE SETTINGS. Soft keys 74-77 select the menu item that appears just above each button at the bottom of display 21.

Referring to Fig. 3, POWER indicator 78 lights when audio player 10 is on. CHARGE indicator 79 lights when the power source 47 is charging. CD IN jack 48 provides 5 volt DC from an AC adaptor to power audio data player 10. RESET button 44 allows the user to reset all of the audio data player settings to the factory defaults.

Referring now to Fig. 4, OFF/LOCK switch 46 allows the user to make buttons 60-77 inactive when switch 46 is slid to the locked position. LINEOUT jack 41 allows a user to connect the audio data player to a separate audio system. Headphones jack 17 allows the user to play the decoded audio on headphones 18. USB port 42 provides connection of audio data player 10 to a PC or other similar device using a USB cable.

In accordance with the principles of the subject invention, audio data player 10 is further operative to provide controlled navigation through a text list provided on display 21 (displayed thereon). It should be appreciated that while the present method is described as implemented on an audio data player, the present method is applicable to PCs (implemented as and/or in audio file management software) and other components or devices that store and/or use audio data files (audio files). Moreover, audio data player 10 performs many functions and includes many features that may not necessarily be described herein. Thus, audio data player 10 has various modes of operation such as retrieval of audio data files, playing of audio data files, creation of lists or user data, and the like.

Initially, audio data player 10 is caused to be in a text search mode, an audio data file search mode, a list mode or similar mode wherein a text list such as an alphabetized text list, listing library, set or collection representing audio data files or other identifying/representing information is provided to display 21 through or in response to user input. The user may then navigate through the text list and select a particular item if desired. Navigation is typically represented by highlighting a single text item of a number of displayed text items. This serves to identify a currently selected text item. Other manners of indicating the current position within the text list such as via a symbol adjacent or associated with a single text item, are contemplated.

The type or form of list that can be retrieved may be selectable from a plurality of lists such as a particular list from a plurality of playlists. Such is initiated by the user through the appropriate buttons (user input(s)). An alphabetical listing typically starts at the beginning of the alphabet (e.g. the letter "A" in the English language alphabet), but audio data player 10 may include user selectable options to start the alphabetized text list at any letter of the alphabet. Audio data player 10, may also be programmed to allow the user to start at the end of the alphabet (i.e. the letter "Z" in the English language alphabet), or anywhere between the beginning and ending letter of the alphabet. It should be appreciated that the same principles apply to text presented in an alphabet other than the English language alphabet as well as non-alphabetized lists including non-alphabet lists such as symbols or combinations thereof.

Controlled navigation according to the principles of the subject invention operates, in one form, as follows. A single, momentary or quick button (user input) press or actuation in the desired direction that is less than a first period of time or duration advances one item in the list and shows or provides same on display 21 (i.e. displays). The direction of advancement may be in either direction, but depends on the alphabetical starting place within the list and the direction (i.e. either the up or down arrow 64, 66). An exemplary first duration is 0.5 seconds. Thus, if a momentary press of a navigation button is received by audio data player 10, the list is moved (advanced or decremented, depending on the navigation key, i.e. up or down, that is actuated) by one item. If the user holds the button in the desired direction for a duration that is longer than the first duration, but less than a second duration, the items advance at a first predetermined rate of text advancement. The first predetermined rate of text advancement is preferably greater than one text item at a time. In an exemplary form, the second duration is 2.0 seconds and the first predetermined rate of text advancement (or decrement in a reverse scrolling direction) is five (5) text items per second. Thus, if the button is held for a time period between 0.5 seconds and 2.0 seconds, the text will advance or decrement at a rate of 5 items per second.

If the user holds the button in the desired direction for a duration that is longer than the second duration but less than a third duration (i.e. audio data player 10 receives a signal for a duration that is longer than the second duration but less than a third duration and/or responds thereto), the items advance at a second predetermined rate of text advancement that is greater than the first predetermined rate of text advancement. Again, such advancement is shown on the display, providing visual confirmation of text scrolling or navigating. The second predetermined rate of text advancement is subject to variation. In an exemplary form, and keeping with the present scheme, the third duration is 4.0 seconds and the second rate of text advancement is ten (10) text items per second. Thus, if the button is held for a time period between 2.0 seconds and 4.0 seconds, the text will advance at a rate of 10 items per second.

Further, if the user holds the button in the desired direction for a duration that is longer than the third duration but less than a fourth duration, the items may advance in accordance with a third predetermined rate of text advancement, in an exemplary form being page by page, preferably with a pause between the advancing pages. Again, such advancement is shown on the display. In an exemplary form and keeping with the present scheme, the fourth duration is 6.0 seconds. Thus, if the button is held for a time period between 4.0 seconds and 6.0 seconds, text is advanced by the third predetermined rate of text advancement or page by page. A page is typically defined as the amount of text that will fill or fit on display 21 at one time.

Finally, if the user holds the button in the desired direction for a duration exceeding the fourth duration, the text items are advanced in accordance with a fourth predetermined rate of text advancement, that in an exemplary form, may be to the beginning page of each next letter of the alphabet and so on until the end of the list is reached or the button is released. Thus, if the button is held for more than 6.0 seconds, text is advanced in accordance with the fourth rate of text advancement or page by page until the end of the text list is reached.

It should be appreciated that the various durations and/or predetermined rates of text advancement (in a first or second direction of movement, e.g. a forward or reverse direction of text movement) are only exemplary. Moreover, some modes (button actuation retention durations) and/or rates of text advancement may be skipped. Further, release of the button stops advancement of the text at any time. Re-actuating (pressing the button again) starts the process over. Audio data player 10 is thus operative, adapted and/or configured to function in the manners described herein in response to user input as further described herein.

In another form of the present invention, controlled navigation operates in accordance with or in various modes depending on the length of time that the user holds down the button in the desired direction and/or the number of text entries for a particular letter of the alphabet. This form of the present invention operates as follows (or is implemented such that the electronic device functions as indicated in response to receipt of user input as indicated). A single quick key press for a de-bounce period is accepted as a valid key press. The de-bounce period may be selected as appropriate, but is about 100ms or less and preferably 50ms. However, in some cases, the de-bounce period may reach 150ms. The de-bounce rules apply to up and down arrow keys 64, 66 when these keys are designated as the navigation control keys. Single quick key press detection puts audio data player 10 into a single line advance mode. In the single line advance mode, text is advanced a single line per press. As soon as a key press is detected audio data player 10 responds with a single line advance of the highlight, cursor, and/or text. If the key de-bounce time period is set to 100 ms, it should be able to detect a key press in 100 ms. If the key is released for 100 ms and pressed again, it should respond with a second key press recognition 100 ms later. Therefore, a second line advance could take place at 300 ms from the start of the first key press and another at 500 ms, and so on. Again, the direction of advancement (increment or decrement) may be in either direction, but depends on the alphabetical starting place within the list and the particular button used (i.e. either the up or down arrow buttons 64, 66).

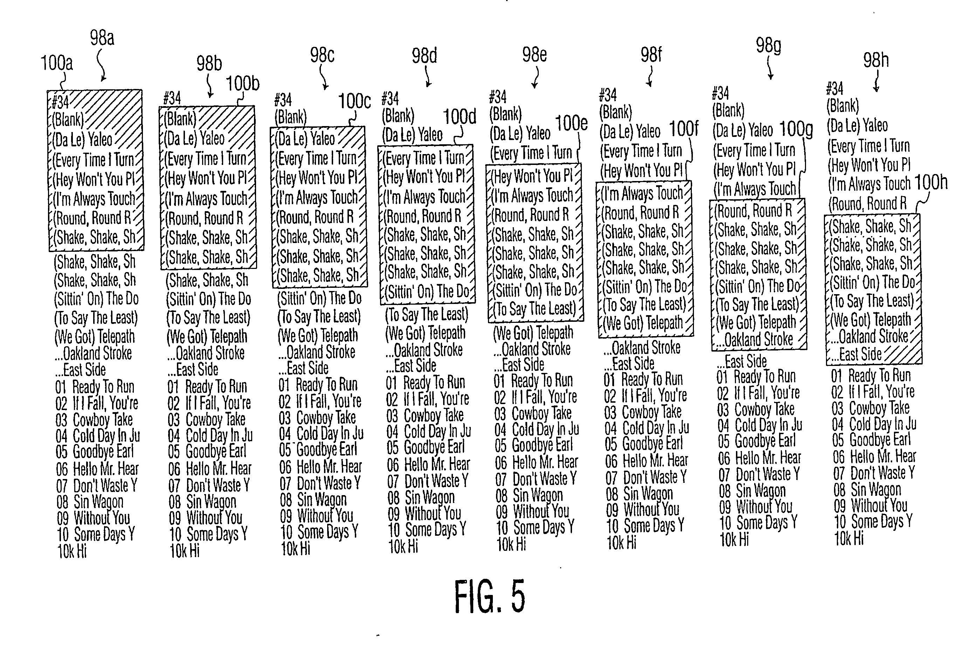

Fig. 5 visually illustrates one embodiment of the single line advance mode or line by line advancing. Each column 98a-h of Fig. 5 represents the same selected list of audio data files or text entries representing audio data files. The highlighted portion 100a-h in each respective column 98a-h represents display 21 or that which is shown or showable on display 21 (collectively, display 21). As audio data player 10 receives a single key press, text lines advance one by one or scroll across display 21. Thus, each key press moves a top text line out of display 21 and moves another line of text into display 21. This occurs for each key press. Thus, Fig. 5 represents seven (7) single line advancement mode key presses. It should be appreciated that while the highlighted portion 100 is moving with respect to the list 98, this is only to show how the text moves through the highlighted area 100.

When the same key is held in the desired direction for a period of time or duration, audio data player 10 goes into a first predetermined rate of text advancement mode of operation. In the first predetermined rate of text advancement mode, text is advanced and displayed at a predetermined rate of speed or by a predetermined text advancement scheme. This may be embodied as an accelerated or fast scrolling line-by-line mode. In the fast scrolling line-by-line mode, text is advanced one line at a time but in a continuous and fast manner. Again, this is displayed. Preferably the fast manner is as fast as the system will respond and display 21 can respond without experiencing latency or other display problems. In an exemplary manner, the fast scrolling line-by-line mode is initiated when the key remains pressed for more than 500 ms. Audio data player 10 will continue to remain in the fast scrolling line by line mode until the key is released, the end of the text list is reached, or audio data player 10 is caused to enter a second predetermined rate of text advancement mode or operation.

Audio data player 10 is caused to enter the second predetermined rate of text advancement mode in response to user input of a given duration. This second predetermined rate of text advancement mode may be embodied as a fast paging mode. With respect to the fast paging mode, audio data player 10 goes into the fast paging mode based on the following conditions. If the first character of the selected list that is in the fast scrolling line by line mode does not change for a designated period of time, then audio data player 10 initiates the fast paging mode. The designated period of time may be termed the fast page time. Fast paging mode is used until the first character does change or the end of the list is reached. Within the fast paging mode, there should be an adjustable page pause. The adjustable page pause in milliseconds (ms) provides a pause for each page so that the user can recognize the page/data. In an exemplary form, the fast paging time may be 3.5 seconds while the page pause may be 500 ms. Using these parameters, the fast paging mode will have smooth line by line scrolling until a long list is encountered that has the same starting character. Then it will go into the fast page mode to get through that section more quickly.

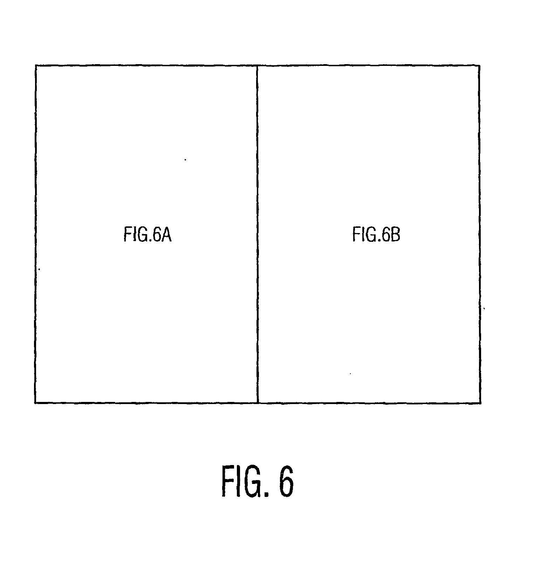

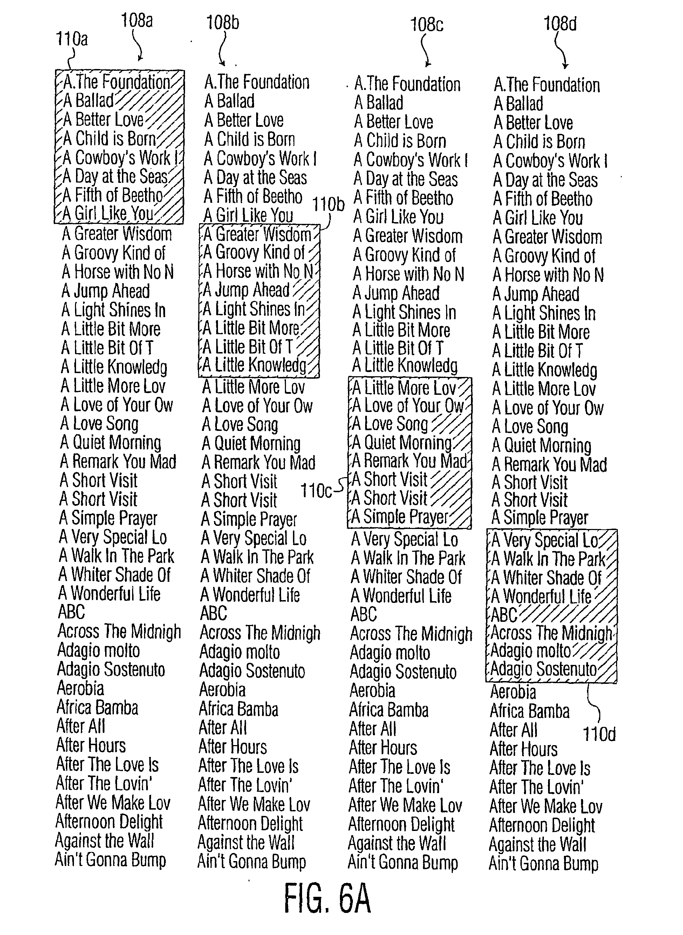

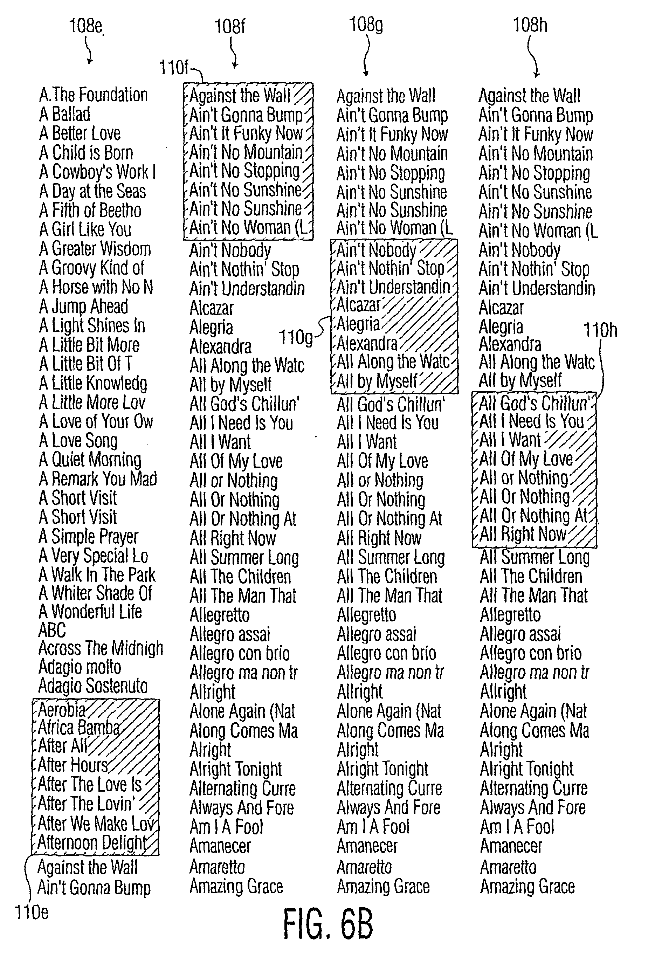

Fig. 6 visually illustrates one embodiment of the fast paging mode. Each column 108a-h of Fig. 6 represents the same selected list of audio data files or text entries representing audio data files. The highlighted portion 110a-h in each respective column 108a-h represents display 21 or that which is shown or showable on display 21 (collectively, display 21). As audio data player 10 is in the fast paging mode, pages of text advance one by one or scroll across display 21. Thus, holding the key moves a page of text at a time onto display 21 and moves the previous page of text from display 21. Thus, Fig. 6 represents seven pages of text advancement while in the fast paging mode. It should be appreciated that while the highlighted portion 100 is moving with respect to the list 98, this is only to show how the text moves through the highlighted area 100.

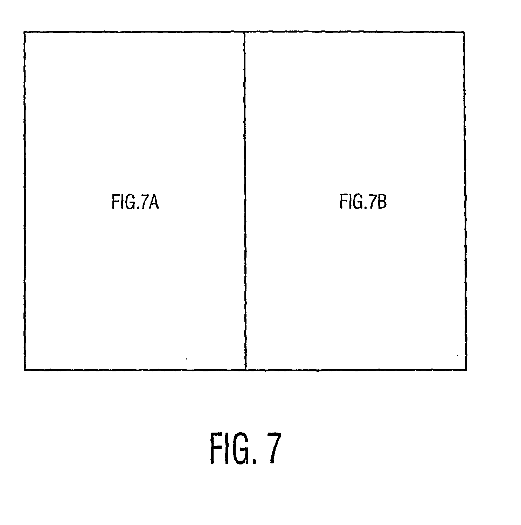

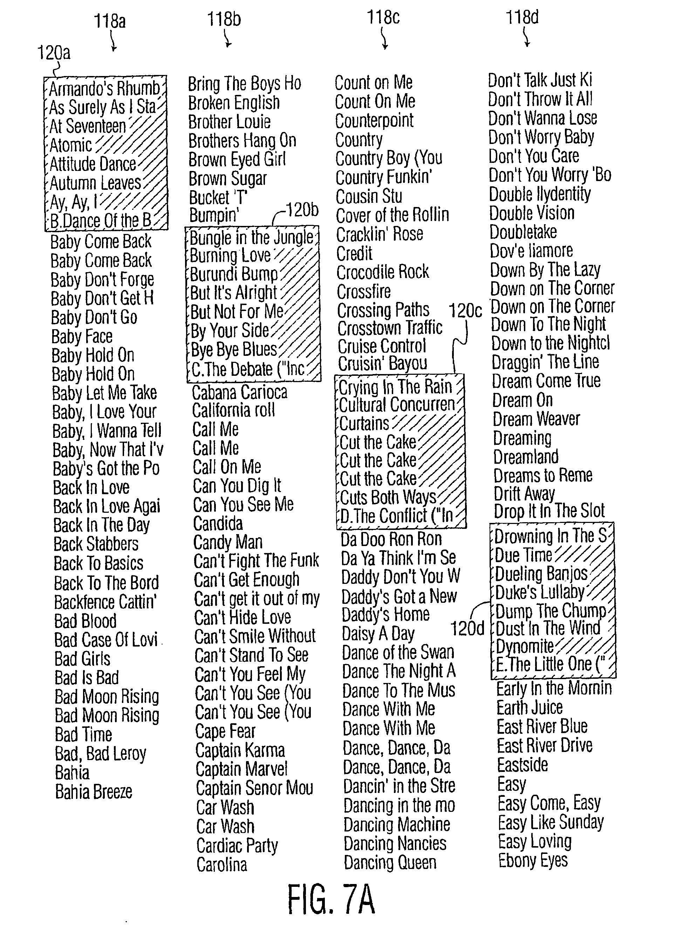

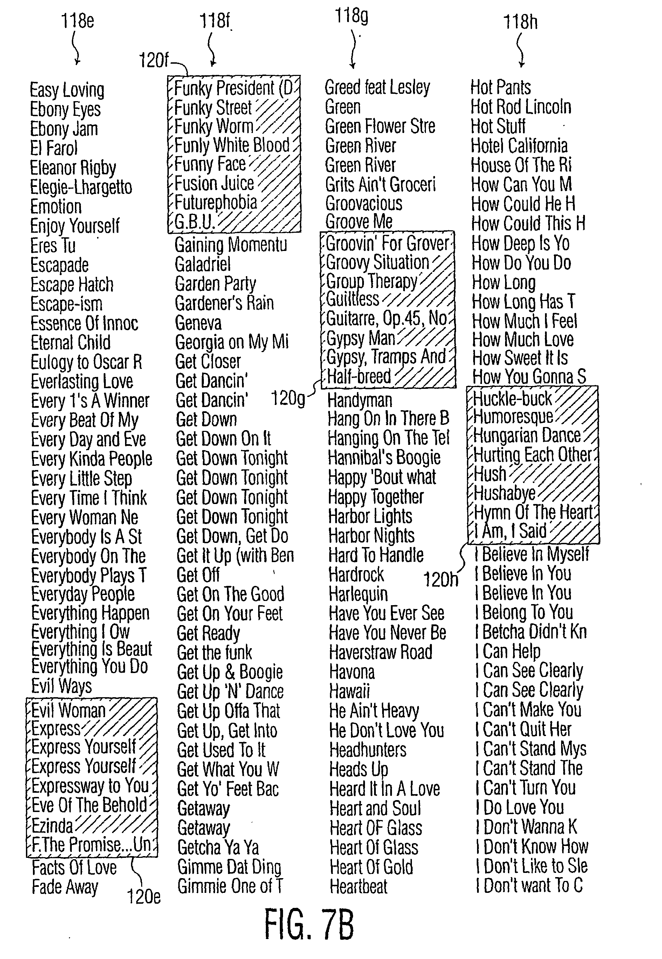

Once fast page mode has reached a character change of the first letter of the text list, audio data player 10 enters a third predetermined rate of text advancement mode of operation (mode) upon continued receipt of user input. In one form, the third rate of text advancement mode is an alphabetical scrolling mode. The alphabetical scrolling mode is preferably maintained until the end of the list is reached (assuming the key has not been released). Particularly, each page that is displayed begins with the letter of the alphabet. Fig. 7 visually illustrates one embodiment of the alphabetical paging mode. Each column 118a-h of Fig. 6 represents the same selected list of audio data files or text entries representing audio data files. The highlighted portion 120a-h in each respective column 118a-h represents display 21 or that which is shown or showable on display 21 (collectively, display 21). As audio data player 10 is in the alphabetical paging mode, pages of text advance one by one or scroll across display 21. Thus, holding the key moves a page of text starting with the next letter of the alphabet onto display 21 and moves the previous page of text from display 21. Thus, Fig. 7 represents seven pages of text advancement while in the alphabetical paging mode. It should be appreciated that while the highlighted portion 120 is moving with respect to the list 118, this is only to show how the text moves through the highlighted area 120. Of course, as with the other embodiment of the present method, release of the key starts the process over.

It should be appreciated that the various modes described herein may be combined with other modes or some modes left out of the sequence. For example, another form or variant of the present invention is to remain in a list mode until the first letter of the alphabet changes. At this point, a timer may be started which, when it expires, puts audio data player 10 into a page mode. Again, various manners of providing navigation through a list and selection of an item from that list are contemplated.

It should be appreciated that the implementation of the present invention in other types of electronic devices may differ from that described in connection with audio data player 10. Likewise, the principles of navigation and/or item selection as described herein (as software and/or hardware), is applicable to other devices and/or components that utilize audio data files. For instance, the principles described herein with respect to navigation through a text list of audio files are applicable to implementation thereof in a PC such as through music management software.

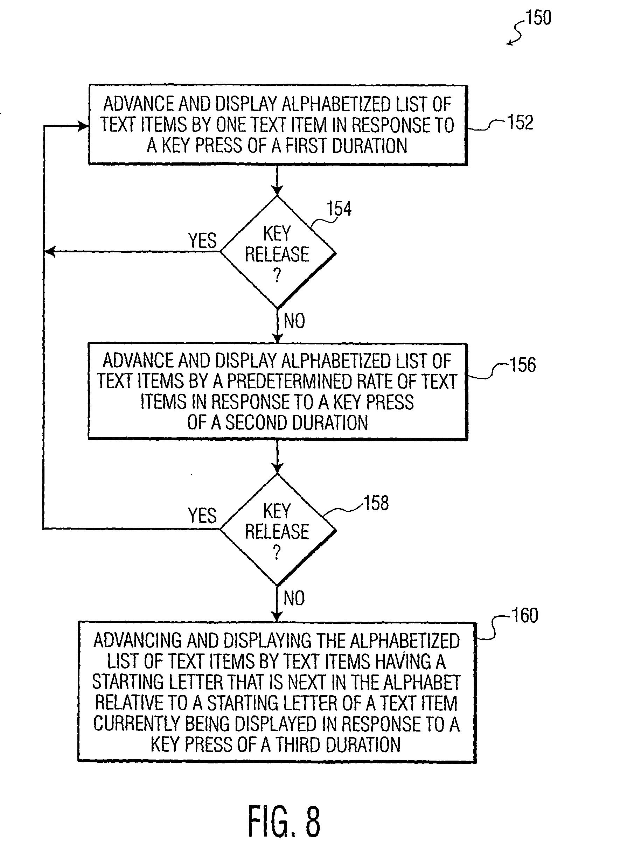

Referring now to Fig. 8, there is depicted a flowchart, generally designated 150, representing an exemplary method in accordance with the principles presented herein. The exemplary method may be utilized in various electronic devices such as a PC, a portable audio data player, or other device that provides a display and/or others as described herein. The electronic device is thus programmed, operable, adapted and/or configured to accomplish method 150.

Method 150 begins with step or block 152 wherein the advancement and display of an alphabetized list of text items by one text item in response to a key press of a first duration. Upon recognition of a key press such as up button 64, the electronic device singularly advances and displays one text item for viewing by the user. The display preferably shows as many text items as will fill the display, but highlight only the "advanced to" text item. In step 154, the electronic device determines whether the key pressed by the user is released or not. If the key pressed by the user is released (i.e. YES), then the electronic device waits for another key press of a first duration per step 152 and advances and displays the next text item. Thus, continued single actuation (press/no press) of the key causes individual or single advancement through the alphabetized list of text items.

Continuing in step 154, if the key pressed by the user in step 152 is not released (i.e. NO), then program flow proceeds to step 156. In step 156, advancement and display of the alphabetized list of text items is provided at a predetermined rate of text items in response to key press by the user of a second duration. Thus, as the user continues to hold the key (continues to hold down or actuate the key), the alphabetized list of text items scrolls across the display at a predetermined rate of text items (e.g. by a page at a time). In step 158, the electronic device determines whether the key pressed by the user is released or not. If the key pressed by the user is released (i.e. YES), then the electronic device begins the process over, waiting for a key press (i.e. step 152). Another key press of a first duration per step 152 advances and displays the next text item.

Continuing in step 158, if the continued key press by the user in step 154 is not released (i.e. NO), then program flow proceeds to step 160. In step 160, advancement and display of the alphabetized list of text items having a starting letter that is next in the alphabet relative to a starting letter of a text item currently being displayed is provided in response to key press by the user of a third duration. Thus, as the user further continues to hold the key (continues to hold down or actuate the key), the alphabetized list of text items scrolls across the display commencing with text items having a starting letter that is next in the alphabet relative to the starting letter of a currently displayed text item. Release of the key at this point starts over the process.

It should be appreciated that the flowchart 150 described above and depicted in Fig. 8 provides a manner of exemplary operation of the subject invention as described herein. The subject invention may be implemented utilizing less or different steps than all of the steps of the flowchart 150. This may be reflected in the claims. Moreover, more or less steps in alternative embodiments of the procedure, method or operation 150 may implement the subject invention in accordance with the principles recited herein. As well, subsets of the above procedure 150 may implement the principles of the subject invention rather than the entire procedure. Variations are also contemplated.

While this invention has been described as having a preferred design, the present invention can be further modified within the spirit and scope of this disclosure. This application is therefore intended to cover any variations, uses, of adaptations of the invention using its general principles. For example, either a single key that may be pressed in various directions, or a plurality of keys each representative of a particular direction may be used to implement the principles of this invention. Further, this application is intended to cover such departures from the present disclosure as come within known or customary practice in the art to which this invention pertains and that fall within the limits of the appended claims.

## Claims

1. A method (150) of navigating through an alphabetized ordered list of text items identifying elements accessible from an apparatus comprising the steps of:
advancing and displaying the alphabetized list of text items, in a first scroll mode, by scrolling by one text item at a time in response to pressing a key for a duration that is longer than a first duration (152) and less than a second duration
advancing by a predetermined number of text items greater than one in the alphabetized ordered list of text items and displaying the alphabetized list of text items each displayed page having the predetermined number of text items greater than one, in a second scroll mode, in response to pressing the key for a duration that is longer than the second duration (156) and less than a third duration; a pause being included between the display of each page of text items each displayed page having consecutive text items from the alphabetized list of text item and
advancing and displaying the alphabetized list of text items, in a third scroll mode, by text items having a starting letter that is next in the alphabet relative to a starting letter of a text item currently being displayed in response to pressing the key for longer than the third duration (160).

2. The method of claim 1, wherein the alphabetized list of text items represents audio data files.

3. The method of claim 1, wherein the step of advancing and displaying the alphabetized list of text items by the predetermined number of text items in response to pressing the key for the second duration includes:
advancing and displaying the alphabetized list of text items by the predetermined number of text items in response to the key press of the second duration until the key press lasts for the third duration.

4. The method of claim 1, wherein the step of advancing and displaying the alphabetized list of text items by text items having a starting letter that is next in the alphabet relative to a starting letter of a text item currently being displayed in response to pressing the key for the third duration includes:
advancing and displaying the alphabetized list of text items by a starting letter at a second predetermined rate in response to a continued pressing of the key for the third duration until an end of the alphabetized list of text items is reached or the key is released.

5. The method of claim 1, further comprising the steps of:
decrementing and displaying the alphabetized list of text items by one text item in response to a key press of a second key of the first duration;
decrementing and displaying the alphabetized list of text items by a predetermined number of text items in response to a key press of the second key of the second duration; and
decrementing and displaying the alphabetized list of text items by text items having a starting letter that is next in the alphabet relative to a starting letter of a text item currently being displayed in response to a key press of the second key of the third duration.

6. The method of claim 1, wherein:
the step of advancing and displaying the alphabetized list of text items by text items having a starting letter that is next in the alphabet relative to a starting letter of a text item currently being displayed in response to pressing the key for the third duration includes : shortening display duration of the advancing alphabetized list of text items in response to pressing the key for a fourth duration that is longer than the third duration.

7. A digital audio data player (10) comprising:
a data storage device (32) for storing an alphabetized ordered list of text items corresponding to a plurality of digitally encoded audio data files;
a display (20) for displaying the alphabetized list of text items;
a first user input device (26) for accepting user input; and
a controller (22), coupled to the data storage device, the display, and the first user input device, for controlling the operation of the data storage device and the display in response to user input;
wherein the controller is operative in a first scroll mode to advance and display the alphabetized list of text items by one text item in response to user input for a duration that is longer than the first duration and less than a second duration via the first user input device, in a second scroll mode to advance by a predetermined number of text items greater than one in the alphabetized ordered list of text items and display consecutives pages of text items from the alphabetized list of text items by this predetermined number of text items greater than one wherein a pause is included between the display of each page of text items, each displayed page having consecutive text items from the alphabetized list of text items in reponse to user input for a duration that is longer than the second duration and less than a third duration via the first user input device; and in a third scroll mode to advance and display the alphabetized list of text items by text items having a starting letter that is next in the alphabet relative to a starting letter of a text item currently being displayed in response to user input of a third duration that is longer than the third duration via the first user input device.

8. The digital audio data player of claim 7, wherein the controller is further operative to advance and display the alphabetized list of text items by the predetermined number of text items in response to user input of the second duration via the first user input device until the user input lasts for the third duration.

9. The digital audio data player of claim 7, wherein the controller is further operative to advance and display the alphabetized list of text items by a starting letter at a second predetermined rate in response to a user input of the third duration via the first user input device until an end of the alphabetized list of text items is reached or the user input ceases.

10. The digital audio data player of claim 7, further comprising:
a second user input device for accepting user input, the second user input device coupled to the controller, and
wherein the controller is further operative to (iv) decrement and display the alphabetized list of text items by one text item in response to user input of the first duration via the second user input device, (v) decrement and display the alphabetized list of text items by the predetermined number of text items in response to user input of the second duration via the second user input device, and (vi) decrement and display the alphabetized list of text items by text items having a starting letter that is next in the alphabet relative to a starting letter of a text item currently being displayed in response to user input of the third duration via the second user input device.

11. The digital audio data player of claim 7, wherein the controller is further operative to shorten a length of duration of display of the advancing alphabetized list of text items in response to user input of a fourth duration that is longer than the third duration.

## Patentansprüche

1. Verfahren (150) zum Navigieren durch eine alphabetisierte geordnete Liste von Textposten, die Elemente identifizieren, die von einer Vorrichtung aus zugänglich sind, mit den folgenden Schritten:
Vorrücken und Anzeigen der alphabetisierten Liste von Textposten in einem ersten Scrollmodus durch Scrollen um einen Textposten auf einmal als Reaktion auf das Drücken einer Taste für eine Dauer, die länger als eine erste Dauer (152) und kleiner als eine zweite Dauer ist,
vorrücken um eine vorbestimmte Anzahl von Textposten größer als 1 in der alphabetischen geordneten Liste von Textposten und Anzeigen von aufeinanderfolgenden Seiten von Textposten aus der alphabetisierten Liste von Textposten, wobei jede angezeigte Seite die vorbestimmte Anzahl von Textposten größer als 1 aufweist, in einem zweiten Scrollmodus als Reaktion auf das Drücken der Taste für eine Dauer, die länger als die zweite Dauer (156) und kleiner als eine dritte Dauer ist; wobei eine Pause zwischen der Anzeige jeder Seite von Textposten vorgesehen ist, wobei jede angezeigte Seite aufeinanderfolgende Textposten aus der alphabetisierten Liste von Textposten aufweist, und
Vorrücken und Anzeigen der alphabetisierten Liste von Textposten in einem dritten Scrollmodus um Textposten, die einen Anfangsbuchstaben aufweisen, der im Alphabet relativ zu einem Anfangsbuchstaben eines gerade angezeigten Textpostens der nächste ist, als Reaktion auf das Drücken der Taste für mehr als die dritte Dauer (160).

2. herfahren nach Anspruch 1, wobei die alphabetisierte Liste von Textposten Audiodateien repräsentiert.

3. Verfahren nach Anspruch 1, wobei der Schritt des vorrückens und Anzeigens der alphabetisierten Liste von Textposten um die vorbestimmte Anzahl von Textposten als Reaktion auf das Drücken der Taste für die zweite Dauer Folgendes umfasst:
Vorrücken und Anzeigen der alphabetisierten Liste von Textposten um die vorbestimmte Anzahl von Textposten als Reaktion auf das Tastendrücken der zweiten Dauer, bis das Tastendrücken die dritte Dauer dauert.

4. Verfahren nach Anspruch 1, wobei der Schritt des Vorrückens und Anzeigens der alphabetisierten Liste von Textposten um Textposten, die einen Anfangsbuchstaben aufweisen, der im Alphabet relativ zu einem Anfangsbuchstaben eines gerade angezeigten Textpostens der nächste ist, als Reaktion auf das Drücken der Taste für die dritte Dauer Folgendes umfasst:
vorrücken und Anzeigen der alphabetisierten Liste von Textposten um einen Anfangsbuchstaben mit einer zweiten vorbestimmten Rate als Reaktion auf ein fortgesetztes Drücken der Taste für die dritte Dauer, bis ein Ende der alphabetisierten Liste von Textposten erreicht wird oder die Taste losgelassen wird.

5. Verfahren nach Anspruch 1, ferner mit den folgenden Schritten:
Dekrementieren und Anzeigen der alphabetisierten Liste von Textposten um einen Textposten als Reaktion auf ein Tastendrücken einer zweiten Taste der ersten Dauer;
Dekrementieren und Anzeigen der alphabetisierten Liste von Textposten um eine vorbestimmte Anzeige von Textposten als Reaktion auf ein Tatendrücken der zweiten Taste der zweiten Dauer; und
Dekrementieren und Anzeigen der alphabetisierten Liste von Textposten um Textposten, die einen Anfangsbuchstaben aufweisen, der im Alphabet relativ zu einem Anfangsbuchstaben eines gerade angezeigten Textpostens der nächstes ist, als Reaktion auf ein Tastendrücken der zweiten Taste der dritten Dauer.

6. Verfahren nach Anspruch 1, wobei
der Schritt des Vorrückens und Anzeigens der alphabetisierten Liste von Textposten um Textposten, die einen Anfangsbuchstaben aufweisen, der im Alphabet relativ zu einem Anfangsbuchstaben eines gerade angezeigten Textpostens der nächstes ist, als Reaktion auf ein Drücken der Taste für die dritte Dauer Folgendes umfasst: verkürzen der Anzeigedauer der vorrückenden alphabetisierten Liste von Textposten als Reaktion auf das Drücken der Taste für eine vierte Dauer, die länger als die dritte Dauer ist.

7. Digitaler Audiodatenplayer (10), umfassend:
eine Datenspeichereinrichtung (32) zum Speichern einer alphabetisierten geordneten Liste von Textposten, die mehreren digitalcodierten Audiodateien entsprechen;
ein Display (20) zum Anzeigen der alphabetisierten Liste von Textposten;
eine erste Benutzereingabeeinrichtung (26) zum Annehmen von Benutzereingaben; und
eine mit der Datenspeichereinrichtung, dem Display und der ersten Benutzereingabeeinrichtung gekoppelte Steuerung (22) zum Steuern des Betriebs der Datenspeichereinrichtung und des Displays als Reaktion auf Benutzereingabe;
wobei die Steuerung in einem ersten Scrollmodus wirkt, um die alphabetisierte Liste von Textposten als Reaktion auf Benutzereingabe für eine Dauer, die länger als die erste Dauer und kleiner als eine zweite Dauer ist, über die erste Benutzereingabeeinrichtung um einen Textposten vorzurücken und anzuzeigen, in einem zweiten Scrollmodus als Reaktion auf Benutzereingabe für eine Dauer, die länger als die zweite Dauer und kleiner als eine dritte Dauer ist, über die erste Benutzereingabeeinrichtung um eine vorbestimmte Anzahl von Textposten größer als 1 in der alphabetisierten geordneten Liste von Textposten vorzurücken und aufeinanderfolgende Seiten von Textposten aus der alphabetisierten Liste von Textposten um diese vorbestimmte Anzahl von Textposten größer als 1 anzuzeigen, wobei eine Pause zwischen der Anzeige jeder Seite von Textposten vorgesehen ist, wobei jede angezeigte Seite aufeinanderfolgende Textposten aus der alphabetisierten Liste von Textposten aufweist; und in einem dritten Scrollmodus als Reaktion auf Benutzereingabe einer Dauer, die länger als die dritte Dauer ist, über die erste Benutzereingabeeinrichtung die alphabetisierte Liste von Textposten um Textposten mit einem Anfangsbuchstaben, der im Alphabet relativ zu einem Anfangsbuchstaben eines gerade angezeigten Textpostens der nächste ist, vorzurücken und anzuzeigen.

8. Digitaler Audiodatenplayer nach Anspruch 7, wobei die Steuerung ferner wirkt, um als Reaktion auf Benutzereingabe der zweiten Dauer über die erste Benutzereingabeeinrichtung die alphabetisierte Liste von Textposten um die vorbestimmte Anzahl von Textposten vorzurücken und anzuzeigen, bis die Benutzereingabe die dritte Dauer dauert.

9. Digitaler Audiodatenplayer nach Anspruch 7, wobei die Steuerung ferner wirkt, um als Reaktion auf eine Benutzereingabe der dritten Dauer über die erste Benutzereingabeeinrichtung die alphabetisierte Liste von Textposten um einen Anfangsbuchstaben mit einer zweiten vorbestimmten Rate vorzurücken und anzuzeigen, bis ein Ende der alphabetisierten Liste von Textposten erreicht ist oder die Benutzereingabe aufhört.

10. Digitaler Audiodatenplayer nach Anspruch 7, ferner umfassend:
eine zweite Benutzereingabeeinrichtung zum Annehmen von Benutzereingabe, wobei die zweite Benutzereingabeeinrichtung mit der Steuerung gekoppelt ist, und
wobei die Steuerung ferner für Folgendes wirkt: (iv) Dekrementieren und Anzeigen der alphabetisierten Liste von Textposten um einen Textposten als Reaktion auf Benutzereingabe der ersten Dauer über die zweite Benutzereingabeeinrichtung, (v) Dekrementieren und Anzeigen der alphabetisierten Liste von Textposten um die vorbestimmte Anzahl von Textposten als Reaktion auf Benutzereingabe der zweiten Dauer über die zweite Benutzereingabeeinrichtung und (vi) Dekrementieren und Anzeigen der alphabetisierten Liste von Textposten um Textposten mit einem Anfangsbuchstaben, der im Alphabet relativ zu einem Anfangsbuchstaben eines gerade angezeigten Textpostens der nächste ist, als Reaktion auf Benutzereingabe der dritten Dauer über die zweite Benutzereingabeeinrichtung.

11. Digitaler Audiodatenplayer nach Anspruch 7, wobei die Steuerung ferner wirkt, um eine Länge der Dauer der Anzeige der vorrückenden alphabetisierten Liste von Textposten als Reaktion auf Benutzereingabe einer vierten Dauer, die länger als die dritte Dauer ist, zu verkürzen.

## Revendications

1. Procédé (150) de navigation dans une liste ordonnée alphabétisée d'éléments textuels identifiant des éléments accessibles depuis un appareil, comprenant les étapes suivantes :
avancement et affichage de la liste alphabétisée d'éléments textuels, dans un premier mode de défilement, par un défilement selon un élément textuel à la fois en réponse à l'appui d'une touche pendant une durée supérieure à une première durée (152) et inférieure à une deuxième durée ;
avancement selon un nombre prédéterminé d'éléments textuels supérieur à un dans la liste ordonnée alphabétisée d'éléments textuels et affichage de pages consécutives d'éléments textuels à partir de la liste alphabétisée d'éléments textuels, affichés chacun par une page comportant le nombre prédéterminé d'éléments textuels supérieur à un, dans un deuxième mode de défilement, en réponse à l'appui de la touche pendant une durée supérieure à la deuxième durée (156) et inférieure à une troisième durée ; une pause étant incluse entre l'affichage de chaque page d'éléments textuels ; et
avancement et affichage de la liste alphabétisée d'éléments textuels, dans un troisième mode de défilement, selon des éléments textuels comportant une première lettre qui est la suivante dans l'alphabet par rapport à une première lettre d'un élément textuel actuellement affiché en réponse à l'appui de la touche pendant plus longtemps que la troisième durée (160).

2. Procédé selon la revendication 1, où la liste alphabétisée d'éléments textuels représente des fichiers de données audio.

3. Procédé selon la revendication 1, où l'étape d'avancement et d'affichage de la liste alphabétisée d'éléments textuels selon le nombre prédéterminé d'éléments textuels en réponse à l'appui de la touche pendant là deuxième durée inclut :
un avancement et un affichage de la liste alphabétisée d'éléments textuels selon le nombre prédéterminé d'éléments textuels en réponse à l'appui de touche de la deuxième durée jusqu'à ce que l'appui de touche corresponde à la troisième durée.

4. Procédé selon la revendication 1, où l'étape d'avancement et d'affichage de la liste alphabétisée d'éléments textuels selon des éléments textuels comportant une première lettre qui est la suivante dans l'alphabet par rapport à une première lettre d'un élément textuel actuellement affiché en réponse à l'appui de la touche pendant la troisième durée inclut :
un avancement et un affichage de la liste alphabétisée d'éléments textuels selon une première lettre à une deuxième vitesse prédéterminée en réponse à un appui continu de la touche pendant la troisième durée jusqu'à ce qu'une fin de la liste alphabétisée d'éléments textuels soit atteinte ou que la touche soit relâchée.

5. Procédé selon la revendication 1, comprenant en outre les étapes suivantes :
décrémentation et affichage de la liste alphabétisée d'éléments textuels selon un élément textuel en réponse à un appui d'une deuxième touche de la première durée ;
décrémentation et affichage de la liste alphabétisée d'éléments textuels selon un nombre prédéterminé d'éléments textuels en réponse à un appui de la deuxième touche de la deuxième durée ; et
décrémentation et affichage de la liste alphabétisée d'éléments textuels selon des éléments textuels comportant une première lettre qui est la suivante dans l'alphabet par rapport à une première lettre d'un élément textuel actuellement affiché en réponse à un appui de la deuxième touche de la troisième durée.

6. Procédé selon la revendication 1, où :
l'étape d'avancement et d'affichage de la liste alphabétisée d'éléments textuels selon des éléments textuels comportant une première lettre qui est la suivante dans l'alphabet par rapport à une première lettre d'un élément textuel actuellement affiché en réponse à un appui de la touche pendant la troisième durée inclut : une réduction de la durée d'affichage de la liste alphabétisée d'éléments textuels en cours d'avancement en réponse à l'appui de la touche pendant une quatrième durée supérieure à la troisième durée.

7. Lecteur de données audio numériques (10) comprenant :
un dispositif de stockage de données (32) pour stocker une liste ordonnée alphabétisée d'éléments textuels correspondant à une pluralité de fichiers de données audio à codage numérique ;
un écran (20) pour afficher la liste alphabétisée d'éléments textuels ;
un premier dispositif d'entrée utilisateur (26) pour accepter une entrée utilisateur ; et
un contrôleur (22), couplé au dispositif de stockage de données, à l'écran, et au premier dispositif d'entrée utilisateur, pour commander le fonctionnement du dispositif de stockage de données et de l'écran en réponse à une entrée utilisateur ;
où le contrôleur fonctionne dans un premier mode de défilement pour avancer et afficher la liste alphabétisée d'éléments textuels selon un élément textuel en réponse à une entrée utilisateur pendant une durée supérieure à la première durée et inférieure à une deuxième durée via le premier dispositif d'entrée utilisateur, dans un deuxième mode de défilement pour avancer selon un nombre prédéterminé d'éléments textuels supérieur à un dans la liste ordonnée alphabétisée d'éléments textuels et afficher des pages consécutives d'éléments textuels à partir de la liste alphabétisée d'éléments textuels selon ce nombre prédéterminé d'éléments textuels supérieur à un, où une pause est incluse entre l'affichage de chaque page d'éléments textuels, chaque page affichée comportant des éléments textuels consécutifs à partir de la liste alphabétisée d'éléments textuels en réponse à une entrée utilisateur pendant une durée supérieure à la deuxième durée et inférieure à une troisième durée via le premier dispositif d'entrée utilisateur ; et dans un troisième mode de défilement pour avancer et afficher la liste alphabétisée d'éléments textuels selon des éléments textuels comportant une première lettre qui est la suivante dans l'alphabet par rapport à une première lettre d'un élément textuel actuellement affiché en réponse à une entrée utilisateur d'une troisième durée supérieure à la troisième durée via le premier dispositif d'entrée utilisateur.

8. Lecteur de données audio numériques selon la revendication 7, où le contrôleur fonctionne en outre pour avancer et afficher la liste alphabétisée d'éléments textuels selon le nombre prédéterminé d'éléments textuels en réponse à une entrée utilisateur de la deuxième durée via le premier dispositif d'entrée utilisateur jusqu'à ce que l'entrée utilisateur corresponde à la troisième durée.

9. Lecteur de données audio numériques selon la revendication 7, où le contrôleur fonctionne en outre pour avancer et afficher la liste alphabétisée d'éléments textuels selon une première lettre à une deuxième vitesse prédéterminée en réponse à une entrée utilisateur de la troisième durée via le premier dispositif d'entrée utilisateur jusqu'à ce qu'une fin de la liste alphabétisée d'éléments textuels soit atteinte ou que l'entrée utilisateur soit interrompue.

10. Lecteur de données audio numériques selon la revendication 7, comprenant en outre :
un deuxième dispositif d'entrée utilisateur pour accepter une entrée utilisateur, le deuxième dispositif d'entrée utilisateur étant couplé au contrôleur, et
où le contrôleur fonctionne en outre pour (iv) décrémenter et afficher la liste alphabétisée d'éléments textuels selon un élément textuel en réponse à une entrée utilisateur de la première durée via le deuxième dispositif d'entrée utilisateur, (v) décrémenter et afficher la liste alphabétisée d'éléments textuels selon le nombre prédéterminé d'éléments textuels en réponse à une entrée utilisateur de la deuxième durée via le deuxième dispositif d'entrée utilisateur, et (vi) décrémenter et afficher la liste alphabétisée d'éléments textuels selon des éléments textuels comportant une première lettre qui est la suivante dans l'alphabet par rapport à une première lettre d'un élément textuel actuellement affiché en réponse à une entrée utilisateur de la troisième durée via le deuxième dispositif d'entrée utilisateur.

11. Lecteur de données audio numériques selon la revendication 7, où le contrôleur fonctionne en outre pour réduire la durée d'affichage de la liste alphabétisée d'éléments textuels en cours d'avancement en réponse à une entrée utilisateur d'une quatrième durée supérieure à la troisième durée.
